# EUROPEAN PATENT SPECIFICATION

(11) **EP 2 723 117 B1**
(45) Date of publication and mention of the grant of the patent: **28.11.2018**
(21) Application number: 13199703.3
(22) Date of filing: 19.03.2010
(51) Int. Cl.: H04W 24/02

(54) **Managed unit device, self-optimization method and system**
Verwaltete Einheitenvorrichtung, selbstoptimiertes Verfahren und System
Dispositif d'unité gérée, procédé et système d'auto-optimisation

(30) Priority: 20.03.2009 WO PCT/CN2009/070934; 19.06.2009 CN 200910149932
(43) Date of publication of application: 23.04.2014
(62) Divisional of application: 10753142.8
(73) Proprietor: Huawei Technologies Co., Ltd., Longgang District Shenzhen, Guangdong 518129 (CN)
(72) Inventor: Li, Yuping, 518129 Shenzhen Guangdong (CN); Wang, Wei, 518129 Shenzhen Guangdong (CN); Feng, Bo, 518129 Shenzhen Guangdong (CN); Zou, Lan, 518129 Shenzhen Guangdong (CN); Zhang, Kai, 518129 Shenzhen Guangdong (CN)
(74) Representative: Thun, Clemens

(56) References cited:
- US-A1- 2004 054 766
- US-A1- 2008 288 432
- Anonymous: "3GPP TS 32.500 V8.0.0 Self-Organizing Networks (SON); Concepts and requirements (Release 8)", 3GPP, December 2008 (2008-12), pages 1-13, XP002665427, Retrieved from the Internet: URL:www.3gpp.org/ftp/Specs/archive/32_seri es/32.500/32500-800.zip [retrieved on 2011-12-08]
- SUJUAN FENG ET AL: "Self-Organizing Networks (SON) in 3GPP Long Term Evolution", INTERNET CITATION, 20 May 2008 (2008-05-20), pages 1-15, XP007907980, Retrieved from the Internet: URL:http://www.nomor.de/uploads/gc/TQ/gcTQ fDWApo9osPfQwQoBzw/SelfOrganisi ngNetworksInLTE_2008-05.pdf [retrieved on 2009-03-27]
- HUAWEI: "Add self-optimization related IOC definitions", 3GPP DRAFT; S5-091942, 22 March 2009 (2009-03-22), XP050348244,
- NGMN: "NGMN RECOMMENDATION ON SON & O&M REQUIREMENTS", 3GPP DRAFT; S5-090009 NGMN_RECOMMENDATION_ON_SON_AND_O_M_REQUIRE MENTS, 23 December 2008 (2008-12-23), XP050335477,

## Description

### FIELD OF THE INVENTION

The present invention relates to the field of communication network technologies, and in particular, to a managed unit device, a self-optimization method and system.

### BACKGROUND OF THE INVENTION

Network optimization is one of major scenarios of daily maintenance of communication network. By collecting data such as Key Performance Indicators (KPI), tracking and a Measurement Report (MR) of a current network, a network operating state is monitored, aspects such as neighbor missing, a coverage hole and frequency interference that affect network operating performance are found in time, and adjustment is performed accordingly, so as to achieve the objective of improving the network operating performance.

During conventional network optimization, various network optimization tools are adopted to analyze and sort data, so as to locate and find problems, and maintenance personnel propose a solution of network optimization according to experience and based on the data. The scenario is complex, the process is complicated, and requirements on skills of the maintenance personnel are high.

For a Long Term Evolution (LTE) system of next generation wireless communication technologies, which is characterized by mass Network Elements (NEs), adopts the full Internet Protocol (IP), mixture of multi-vendor devices and different standards, operation and maintenance scenarios faced by the conventional network optimization are more complex. In order to avoid an enormous cost caused by the conventional network optimization which mainly depends on experience, judgment and operation of maintenance personnel, the 3rd Generation Partnership Project (3GPP), an organization for standardization of the next generation communication technologies, proposes the Self-Organizing Network (SON) technologies, that is, experience and intelligence of experts are solidified into programs, so that the network has capabilities to collect data automatically, analyze and identify problems automatically, and perform adjustment automatically. The SON technologies reduce manual intervention to some extent, decrease requirements on skills of maintenance personnel, and eventually achieve an objective of reducing the network operation and maintenance cost.

In the SON technologies, self-optimization as an important SON function covers a large scope, and self-optimization types currently under research of the 3GPP include: Handover optimization, Load Balancing optimization, Interference Control optimization, Capacity & Coverage optimization, Random Access Channel (RACH) optimization, and Energy Saving optimization.

In the prior art, in various self-optimization cases, after an optimization policy is formulated by analyzing, an optimization command is operated manually to execute an optimization process.

During the implementation of the present invention, the inventors find that the prior art at least has the following disadvantages: a northbound interface (Itf-N) between a Network Management System (NMS) and an Element Management System (EMS) does not provide control support of self-optimization operating functions. If a user is required to perform self-optimization on a communication system, possible optimization parameters are required to be acquired by manual analysis, and the self-optimization is completed by sending corresponding configuration modification commands, which greatly increases complexity and processing time of a self-optimization process.

3GPP: '3GPP TS 32.500 V8.0.0 Self-Organizing Networks (SON); Concepts and requirements (Release 8)', December 2008, XP002665427, Retrieved from the Internet: URL: www.3gpp.org, discloses the requirements and architecture for the SON functions within the OAM system.

NGMN: "NGMN RECOMMENDATION ON SON & O&M REQUIREMENTS", 3GPP DRAFT: S5-090009 NGMN_RECOMMENDATION_ON_SON_AND_O_M_REQUIREMENTS, 23 December 2008 (2008-12-23), XP050335477, discloses the requirements and architecture for the SON functions within the OAM system.

### SUMMARY OF THE INVENTION

The present invention is defined in the independent claims. Preferred embodiments are defined in the dependent claims.

The embodiments and/or examples of the following description which are not covered by the appended claims are considered as not being part of the present invention. In the proceeding technical solutions, a managed unit executes self-optimization according to a self-optimization trigger rule, so that the managed unit does not need to execute the self-optimization in the mode of receiving a command, which avoids completing the self-optimization in a mode in which a user sends a corresponding configuration modification command, thereby greatly decreasing the complexity of a self-optimization process, and reducing manual processing time for the self-optimization.

### BRIEF DESCRIPTION OF THE DRAWINGS

FIG. 1A is a schematic diagram of inheritance of an SOManagementCapablity class, an SOTriggerRule class, and an SOProcess class in a self-optimization method according to an embodiment of the present invention;
FIG. 1B is another schematic diagram of inheritance of an SOManagementCapablity class, an SOTriggerRule class, and an SOProcess class in a self-optimization method according to an embodiment of the present invention;
FIG. 1C is a schematic diagram of inheritance of a SelfOptimizationIRP class in a self-optimization method according to an embodiment of the present invention;
FIG. ID is a schematic diagram of relationships of a SelfOptimizationIRP class and an SOManagementCapablity class, an SOTriggerRule class, and an SOProcess class in a self-optimization method according to an embodiment of the present invention;
FIG. 2 is a flow chart of another self-optimization method according to an embodiment of the present invention;
FIG. 3 is a flow chart of still another self-optimization method according to an embodiment of the present invention; and
FIG. 4 is a schematic structural diagram of a self-optimization system according to an embodiment of the present invention.

### DETAILED DESCRIPTION OF THE EMBODIMENTS

A self-optimization method according to an embodiment of the present invention includes: executing, by a managed unit, a self-optimization according to a self-optimization trigger rule. For example, if a self-optimization type set according to the self-optimization trigger rule is Load Balancing, and if the managed unit satisfies a trigger condition set according to the self-optimization trigger rule, the managed unit executes Load Balancing optimization.

In this embodiment, the managed unit executes self-optimization according to the self-optimization trigger rule, thereby preventing optimization executed by inputting a configuration modification command manually, greatly decreasing complexity of a self-optimization process, and reducing manual processing time of the self-optimization process.

In the proceeding embodiment, the self-optimization trigger rule may be set by the managed unit according to a capability of the managed unit by default. For example, if a managing unit does not set a self-optimization trigger rule, the managed unit may use the capability supported by the managed unit as a default self-optimization trigger rule by default.

Alternatively, a self-optimization trigger rule may also be created by the managing unit. Detailed descriptions are as follows.

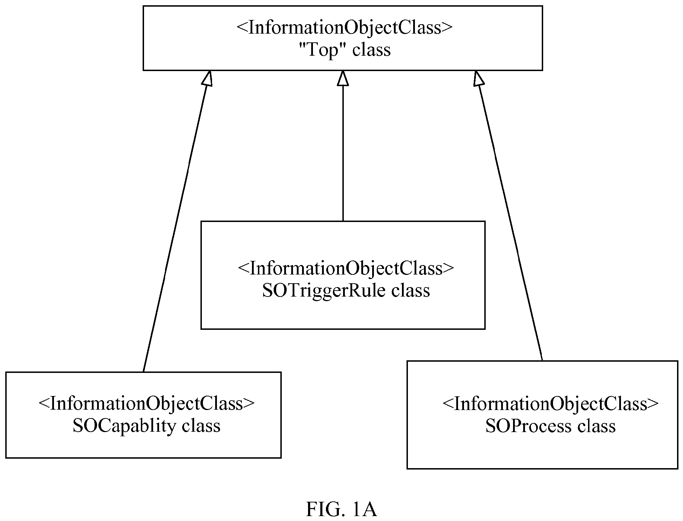

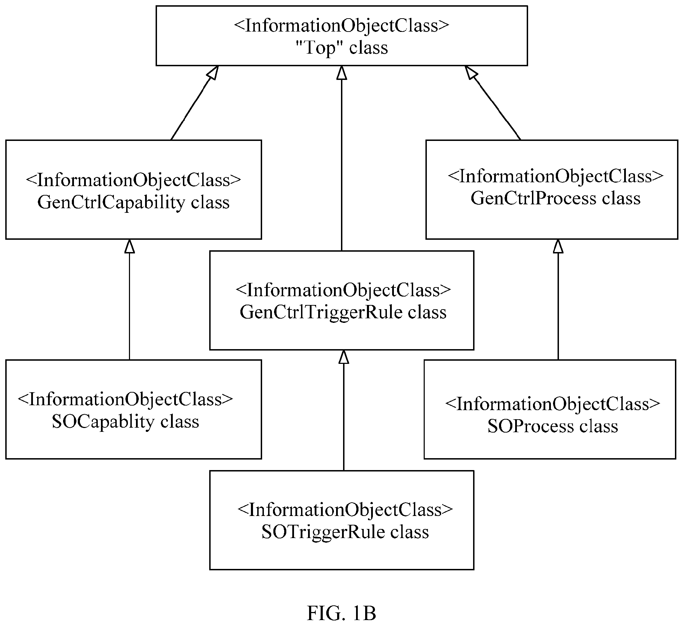

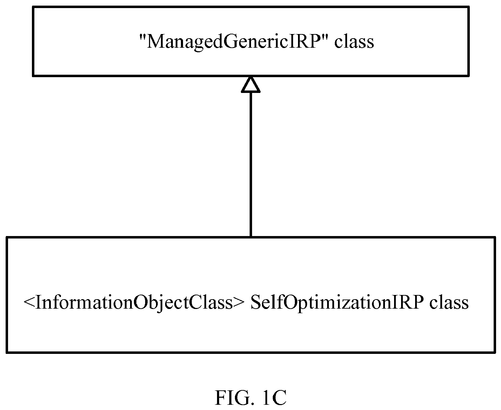

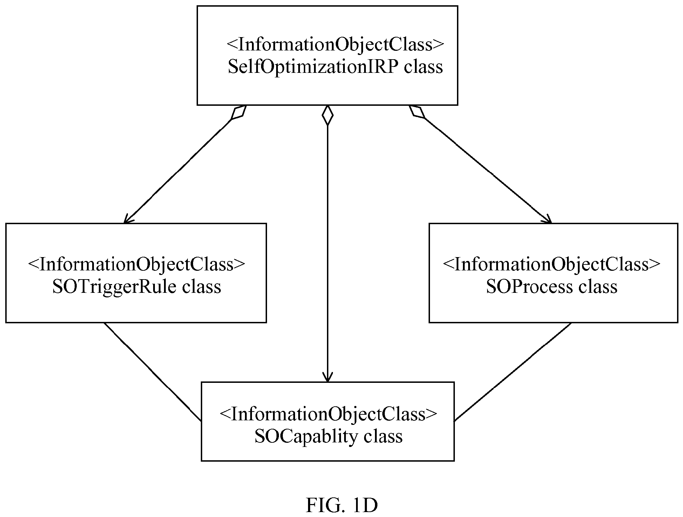

A communication network includes Network elements (NEs). NEs are provided by various vendors, meanwhile each of the vendors provides an EMS to manage the NEs of the vendor through their respective private interface, and an operator performs unified management on the network through an NMS. In the embodiment of the present invention, various classes dedicated to the self-optimization are configured between the NMS and the EMS and the classes are used in various self-optimization cases. For convenience of description, in the embodiment of the present invention, an Integrated Reference Point (IRP) manager IRPManager represents an operation initiator, that is, a managing unit such as an NMS, and an IRP agent IRPAgent represents an operation executor, that is, a managed unit, such as an EMS and an NE. Refer to the 3GPP specifications for the IRPManager and the IRPAgent. Classes that are set may include a self-optimization capability (SOManagementCapablity) class, a self-optimization trigger rule (SOTriggerRule) class, a self-optimization execution (SOProcess) class, and a self-optimization operation (SelfOptimizationIRP) class. Relationships of the classes are shown in FIG. 1A, FIG. 1B, FIG. 1C, and FIG. ID. A schematic diagram of inheritance relationships of the SOManagementCapablity class, the SOTriggerRule class, and the SOProcess class is shown in FIG. 1A, and a parent class is a "Top" class. Alternatively, a schematic diagram of inheritance relationships of the SOManagementCapablity class, the SOTriggerRule class, and the SOProcess class is shown in FIG. IB. The parent class of the SOManagementCapablity class is a "GenCtrlCapability" class, the parent class of the SOTriggerRule class is a "GenCtrlTriggerRule" class, and the parent class of the SOProcess class is a "GenCtrlProcess" class. As shown in FIG. 1C, the parent class of the SelfOptimizationIRP class is a "ManagedGenericIRP" class. Relationships between the SelfOptimizationIRP class and the SOManagementCapablity class, the SOTriggerRule class and the SOProcess class are shown in FIG. ID. The SelfOptimizationIRP class includes relevant operations on self-optimization function management. The SOTriggerRule sets a specific trigger rule based on functions supported by the SOManagementCapablity class. When a trigger condition configured by the SOTriggerRule is satisfied, the system automatically generates an entity of the SOProcess class to perform a specific optimization execution process.

The SOManagementCapablity class is shown in Table 1, which describes a self-optimization capability that the IRPAgent can provide.

**Table 1 SOManagementCapablity class**

| **Attribute Name** | **Support Qualifier** | **Read Qualifier** | **Write Qualifier** | **Comment** |
|---|---|---|---|---|
| Id | M | M | - | Object Identifier (ID) |
| Information of a managed unit (CtrlObj Information) | M | M | - | An entity class or an entity providing a self-optimization capability, which may be an EM; an attribute capable of identifying one or more commonalities of an NE; a NE type; and one or more specific NEs |
| A list of supported optimization trigger conditions (offeredOptimization-TriggerRuleList) | M | M | - | To describe the capability that can be provided by the self-optimization, which is represented by a list, each item of which includes the following information: a supported self-optimization type; information of a supported Performance Measurement (PM) indicator; and a policy granularity supported by the PM indicator. |
| A list of supported optimization objectives (offeredOptimizationObjectiveList) | M | M | - | To describe self-optimization objectives, which are represented by a list including optimization objectives and relationships between the objectives. |

In this table and the following tables, "M" indicates compulsory.

The SOManagementCapablity class is provided by the IRPAgent, and the IRPManager cannot modify the content of the SOManagementCapablity class. The SOManagementCapablity class mainly includes the following information: information of a managed unit, a list of supported optimization trigger conditions, and supported optimization objectives. The list of supported optimization trigger conditions includes a supported optimization type, that is, a supported self-optimization case, a PM indicator supported in a self-optimization trigger condition, and a policy granularity, which is a measurement cycle, supported by the PM indicator. The supported PM indicator is a corresponding PM that can be monitored by a managed unit such as an EMS and an NE. The supported self-optimization objectives include one or more self-optimization objectives, and particularly when the supported self-optimization objectives are multiple self-optimization objectives, relationships between the self-optimization objectives are also included. The relationships exist in multiple manners. For example, different optimization objectives may have different priorities or weights, or a certain arithmetic operation relationship exists between the different optimization objectives, or a certain logic operation relationship exists between the different optimization objectives.

The SOTriggerRule class, as shown in Table 2, describes a rule of triggering a self-optimization process. The self-optimization trigger rule may include: an object ID of a self-optimization trigger rule, information of a managed unit (CtrlObjInformation), an optimization type (OptimizationType), an optimization detection granularity (optimizationMonitoringGranularity), an optimization detection statistical information (optimizationMonitoringCounterInfo), optimization objective information (optimizationObjectiveInfo), and optimization confirmation (needConfirmationBeforeOptimization). It should be noted that content further included in the rule of triggering a self-optimization process may be one of or any combination of the content listed in Table 2. The optimizationMonitoringGranularity attribute is used to indicate a detection cycle of a PM indicator. The optimizationMonitoringCounterInfo attribute is used to indicate statistical information of detection. The statistical information is a trigger condition that a managed unit executes self-optimization. If the managed unit detects the PM indicator by using the optimizationMonitoringGranularity as the cycle, and the detected statistical information satisfies the setting of the optimizationMonitoringCounterInfo in the SOTriggerRule, the execution of the self-optimization is started. The needConfirmationBeforeOptimization attribute is to set whether the self-optimization operation is required to be confirmed manually. If the needConfirmationBeforeOptimization is set that manual confirmation is required, the self-optimization operation can only be performed after the manual confirmation before the managed unit executes the self-optimization. If the needConfirmationBeforeOptimization is set that no manual confirmation is required, no manual confirmation is required, and the self-optimization is directly executed.

**Table 2 SOTriggerRule class**

| **Attribute Name** | **Support Qualifier** | **Read Qualifier** | **Write Qualifier** | **Comment** |
|---|---|---|---|---|
| id | M | M | - | An object ID, used to distinguish different instances of the SOTriggerRule class |
| CtrlObjInformation | M | M | - | An entity providing a self-optimization capability, that is, a run entity of a self-optimization algorithm, which may be an EMS; a NE type; and one or more specific NEs |
| OptimizationType | M | M | | A self-optimization type |
| OptimizationMonitoringGranularity | M | M | - | A policy cycle of a PM indicator, that is, a statistical cycle of the indicator |
| OptimizationMonitoringCounterInfo | M | M | - | A self-optimization trigger condition |
| OptimizationObjectiveInfo | M | M | - | A self-optimization objective |
| needConfirmationBeforeOptimization | M | M | - | Whether the self-optimization operation is required to be confirmed by the IRP Manager |

The SOProcess class, as shown in Table 3, represents an execution process of the self-optimization. The attributes of the SOProcess class include an ID, a managed unit ID (CtrlObjectIdentification), a trigger rule ID (triggerRuleId), and a process status (processStatus).

**Table 3 SOProcess class**

| **Attribute Name** | **Support Qualifier** | **Read Qualifier** | **Write Qualifier** | **Comment** |
|---|---|---|---|---|
| Id | M | M | - | An object ID |
| CtrlObjectIdentific-ation | M | M | - | A managed unit ID, that is, an ID of an NE running self-optimization |
| triggerRuleId | M | M | - | A trigger rule ID, that is, an ID of an SOTriggerRule class used by self-optimization |
| processStatus | M | M | - | An execution status of a self-optimization process, which is a wait-for-user-to-confirm status, a self-optimization-is-running status, or a self-optimization-is-evaluating-a-result status |

The SelfOptimizationIRP class defines an IRP to perform self-optimization management. As shown in Table 4, interface operation functions provided by the SelfOptimizationIRP include: a trigger rule creation function (CreateTriggerRule()) and a self-optimization capability query function (ListSoCapabilities()). The interface operation functions may further include a trigger rule deletion function (DeleteTriggerRule()), a trigger rule query function (ListTriggerRule()), a trigger rule modification function (ChangeTriggerRule()), a self-optimization process query function (ListSoProcess()), an optimization execution confirmation function (ConfirmOptimizationExecution()), and a self-optimization process termination function (TerminateSOProcess()).

**Table 4 SOOptimizationIRP class**

| **Operation Function** | **Input Parameter** | **Output Parameter** | **Comment** |
|---|---|---|---|
| CreateTriggerRule (triggerRuleId, ctrlObjInformation, triggerRule, result) | triggerRuleId: a trigger rule object to be created, that is, a trigger rule ID; the parameter may also be replaced with trigger rule ID information such as attribute information capable of uniquely representing a trigger rule; ctrlObjInformation: information of a managed unit, which is an NE managing unit, capable of identifying a common attribute of a set of NEs, or one piece of or any combination of information of one or more NE entities triggerRule: a trigger rule (including all attributes of a self-optimization trigger rule; information of a managed unit, a self-optimization type, a self-optimization detection granularity, and a self-optimization trigger condition) | triggerRuleId: ID information of a trigger rule such as an ID of a created trigger rule object Result: an execution result, the legal value of which is success, failure, or information indicating the created rule overlaps an existing rule When the Result indicates information that indicates the created rule overlaps an existing rule, the ID information of the trigger rule includes ID information of the conflicting existing rule | Create an SOTriggerRule object |
| DeleteTriggerRule(T riggerRuleId, result) | TriggerRuleId: an ID of a TriggerRule object to be deleted, that is, ID information of a trigger rule | Result: an execution result, the legal value of which is success or failure | Delete an SOTriggerRule obj ect |
| ListSoCapabilities(C trlObj Information, offeredOptimization CapabilityList, result ) | CtrlObjInformation: information of a managed unit | offeredOptimizationCapab ilityList: information of supported capability Result: an execution result, the legal value of which is success or failure | Query a self-optimizatio n capability of a managed unit (SOManageme ntCapablity) |
| ListTriggerRule (triggerRuleId,CtrlO bjInformation, TriggerRuleList, result) | triggerRuleId: an ID of a TriggerRule object to be queried, that is, an ID of a trigger rule, the parameter may also be replaced with trigger rule ID information such as attribute information capable of uniquely representing a trigger rule CtrlObjInformation: information of a managed unit to be queried When the two parameters are default, that is, are not set, self-optimization trigger rules of all managed units are queried. When the two parameters are configured by default other than specifically, self-optimization trigger rules of all managed units are queried. | TriggerRuleList: a list of SOTriggerRule objects, that is, a self-optimization trigger rule list including information of a managed unit, a self-optimization type, a self-optimization detection granularity, and a self-optimization trigger condition | Query information of the SOTriggerRule, in which when the triggerRuleId and the ctrlObjInformat ion are default, it indicates that all trigger rules of all managed units are queried |
| | | Result: an execution result, the legal value of which is success or failure | |
| ListSOProcess(ctrlO bjIdentification, SOMProcessList, result) | CtrlObjInformation: an ID of a managed unit to be queried If no specific ID of a managed unit is specified, all IDs are queried. | SOMProcessList: a list of a self-optimization process, which includes an ID, an ID of a managed unit, an ID of a trigger rule, and status information such as an execution status of a self-optimization process | Query information of a running self-optimizatio n SOProcess object, in which when no input parameter is specified, status information of a self-optimizatio n process of all managed units is queried |
| | | Result: an execution result, the legal value of which is success or failure | |
| ConfirmOptimizatio nExecution (ctrlObj Identification List, result) | ctrlObjIdentification: an ID of a managed unit, that is, an object ID corresponding to confirmed operation, which may be one or more managed unit IDs | Result: an execution result, the legal value of which is success or failure | Confirm self-optimizatio n operation to be executed |
| TerminateSOProcess (ctrl Obj Identification List, result) | ctrlObjIdentification: an ID of a managed unit, that is, an object ID corresponding to confirmed operation, which may be one or more managed unit IDs | Result: an execution result, the legal value of which is success or failure | Terminate a self-optimizatio n process |
| ChangeTriggerRule (triggerRuleId, ctrlObjInformation, triggerRule, result) | triggerRuleId: an ID of a trigger rule to be modified, that is, an object, ID information of the trigger rule; ctrlObjInformation: information of a managed unit triggerRule: a trigger rule (including all attributes of a self-optimization trigger rule: information of a managed unit, a self-optimization type, a self-optimization detection granularity, and a self-optimization trigger condition) | triggerRuleId: an ID of a modified trigger rule object, that is, ID information of a trigger rule Result: an execution result, the legal value of which is success, failure, or information indicating the created rule overlaps an existing rule When the Result indicates information that indicates the created rule overlaps an existing rule, the triggerRuleId includes ID information of the conflicting existing rule | Modify an SOTriggerRule object |

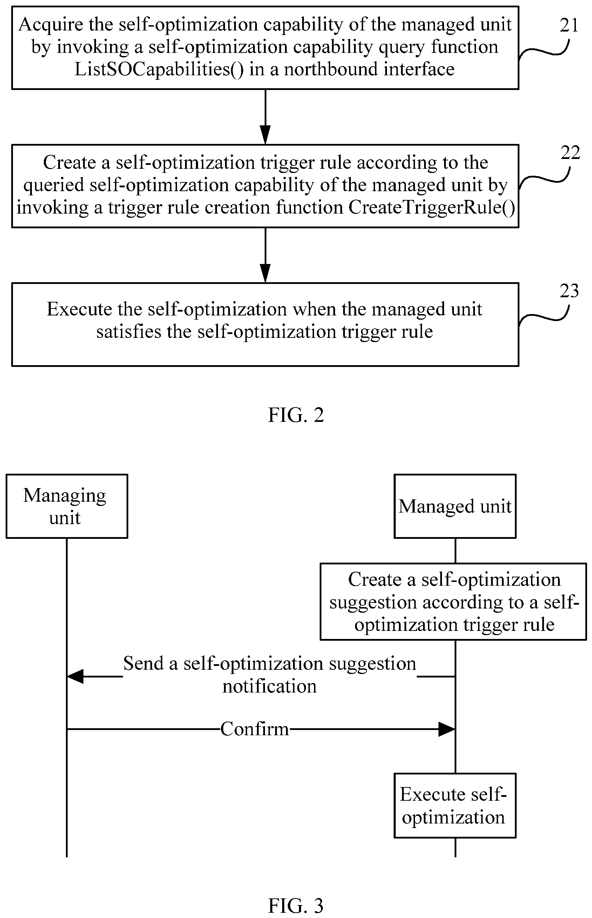

FIG. 2 is a flow chart of another self-optimization method according to an embodiment of the present invention. In this embodiment, pre-configured interfaces are used to trigger a self-optimization process, which includes the following steps:
Step 21: Acquire a self-optimization capability of a managed unit. In a specific implementation process, a managing unit may query and acquire the self-optimization capability of the managed unit (such as an NE) by invoking a self-optimization capability query function such as ListSOCapabilities().
Step 22: Create a self-optimization trigger rule according to the queried self-optimization capability of the managed unit, such as a self-optimization type, a PM indicator that can be monitored, and a policy granularity of monitoring the PM indicator. For example, in a specific implementation process, the managing unit may create a self-optimization trigger rule, such as a self-optimization type and a self-optimization trigger condition according to the queried self-optimization capability of the managed unit by invoking a trigger rule creation function, such as CreateTriggerRule().
Step 23: When the trigger condition of the self-optimization rule is satisfied, the managed unit executes the self-optimization according to the trigger rule created in step 22. For example, if the self-optimization type specified in the trigger rule is Energy Saving, the managed unit executes self-optimization of the Energy Saving.

In the self-optimization method of the embodiment of the present invention, the self-optimization capability of the managed unit may be acquired by the managing unit by other means. For example, the managing unit acquires the self-optimization capability of the managed unit according to instructions in a user manual or content in a contract.

In addition, it should be noted that the managing unit may also create the self-optimization rule not according to the self-optimization capability of the managed unit, but according to, for example, configurations of the managing unit or saved relevant information.

The self-optimization method of the embodiment of the present invention may further include: querying, by the managing unit, a currently existing self-optimization rule of the managed unit. For example, in a specific implementation process, a currently existing self-optimization rule of the managed unit may be queried by invoking a trigger rule query function in the SOOptimizationIRP class for querying a self-optimization trigger rule, for example, ListTriggerRule().

The self-optimization method of the embodiment of the present invention may further include: starting, by the managed unit, a self-optimization process according to the set self-optimization trigger rule when conditions are satisfied. When the needConfirmation-BeforeOptimization attribute of the SOTriggerRule class is configured to be "true", execution of the self-optimization process is suspended before the managed unit executes a specific self-optimization modification operation, until the managing unit confirms a self-optimization execution suggestion sent by the managed unit. For example, in a specific implementation process, the managing unit may confirm the self-optimization execution suggestion sent by the managed unit by invoking an optimization execution confirmation function, such as ConfirmOptimizationExecution(). As shown in FIG. 3, after the self-optimization execution suggestion is confirmed by the managing unit, the managed unit executes the self-optimization.

The self-optimization method of the embodiment of the present invention may further include: querying, by the managing unit, status information of the self-optimization process. For example, in a specific implementation process, the managing unit may query the status information of the self-optimization process by invoking a self-optimization process query function in the SOOptimizationIRP class for querying a self-optimization process, such as ListSOProcess().

Another self-optimization method of the embodiment of the present invention may further include: terminating, by the managing unit, the self-optimization. For example, in a self-optimization execution process, the managing unit may terminate the self-optimization by invoking a self-optimization termination function in the SOOptimizationIRP class for terminating self-optimization, such as TerminateSOProcess().

Another self-optimization method of the embodiment of the present invention may further include: modifying, by the managing unit, the self-optimization trigger rule. For example, in a specific implementation process, the managing unit may modify the self-optimization trigger rule created in step 22 by invoking a trigger rule modification function in the SOOptimizationIRP class for modifying a self-optimization trigger rule, such as ChangeTriggerRule().

The self-optimization method of the embodiment of the present invention may further include: deleting, by the managing unit, the self-optimization trigger rule. For example, in a specific implementation process, the managing unit may delete the self-optimization trigger rule created in step 22 by invoking a trigger rule deletion function in the SOOptimizationIRP class for deleting a self-optimization trigger rule, such as DeleteTriggerRule().

In the method according to the embodiment, the managing unit creates the self-optimization trigger rule to trigger the self-optimization, and the managed unit executes the self-optimization according to the self-optimization trigger rule created by the managing unit, thereby enhancing the flexibility of acquisition of the self-optimization trigger rule. Furthermore, rule modification and deletion and self-optimization termination are performed by invoking the classes, so that a user can monitor and manage the self-optimization process through the managing unit, thereby greatly reducing the complexity and processing time of the self-optimization process.

According to an embodiment of the present invention, a managed unit device, for example an EMS or an NE, is provided, which includes a self-optimization execution module. The self-optimization execution module is configured to execute a self-optimization according to a self-optimization trigger rule, so that a managed unit does not need to receive a command to execute self-optimization, which avoids completing the self-optimization in a mode in which a user sends a corresponding configuration modification command, thereby greatly reducing the complexity of a self-optimization process and the manual processing time of the self-optimization. In addition, a managing device can control the self-optimization by modifying the self-optimization trigger rule, so that the self-optimization process runs under the control and demand of the user.

A self-optimization system according to an embodiment of the present invention may include a managed unit. The managed unit may be the managed unit device in the embodiment of device, and is configured to execute a self-optimization according to a self-optimization trigger rule, so that the self-optimization system may execute the self-optimization without the need of receiving a command from a user, thereby greatly reducing the complexity of a self-optimization process and the manual processing time of the self-optimization. In addition, the user may control the self-optimization by modifying the self-optimization trigger rule, so that the self-optimization process runs under the control and demand of the user.

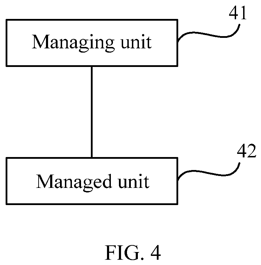

FIG. 4 is a schematic structural diagram of a self-optimization system according to an embodiment of the present invention. The system includes a managing unit 41 and a managed unit 42. The managing unit 41 creates a self-optimization trigger rule, and the managed unit 42 executes self-optimization according to the self-optimization trigger rule created by the managing unit 41, thereby enhancing the flexibility of acquisition of the self-optimization trigger rule. The managing unit 41 may be an NMS, and the managed unit 42 may be an EMS or an NE. The managing unit 41 may also delete or modify the self-optimization trigger rule.

In the proceeding method, device, and system according to the embodiments, the managed unit executes the self-optimization according to the self-optimization trigger rule, so that the managed unit does not need to receive a command to execute the self-optimization, which avoids completing the self-optimization in a mode in which a user sends a corresponding configuration modification command, thereby greatly reducing the complexity of a self-optimization process and the manual processing time of the self-optimization. In addition, the user may control the self-optimization by modifying the self-optimization trigger rule, so that the self-optimization process runs under the control and demand of the user.

The idea of the present invention is also applicable to management and control of a self-healing function of the managed unit performed by the managing unit. For the control of the self-healing function, the managed unit is required to provide capability of supporting alarm information. Relevant trigger rules are set for the alarm information.

Persons skilled in the art should understand that all or part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium capable of storing program codes, such as a ROM, a RAM, a magnetic disk, and an optical disk.

Finally, it should be noted that the above embodiments are merely provided for describing the technical solutions of the present invention, but not intended to limit the present invention. It should be understood by persons skilled in the art that although the present invention has been described in detail with reference to the foregoing embodiments, modifications may be made to the technical solutions described in the foregoing embodiments, or equivalent replacements may be made to some technical features in the technical solutions, as long as such modifications or replacements do not cause the essence of corresponding technical solutions to depart from the scope of the technical solutions of the embodiments of the present invention.

## Claims

1. A self-optimization method, **characterized by** comprising:
acquiring, by a managed unit (42), a self-optimization trigger rule, the self-optimization trigger rule being created (22) by a managing unit (41) in accordance with self-optimization capability of the managed unit;
executing (23), by the managed unit (42), a self-optimization when satisfying condition of the self-optimization trigger rule;
wherein the self-optimization capability of the managed unit (42) comprises at least one of:
capability of handover optimization, and capability of random access channel optimization.

2. The self-optimization method according to claim 1, wherein the self-optimization trigger rule is created in accordance with the self-optimization capability of a managed unit by using at least one of:
a self-optimization type and a self-optimization objective, the self-optimization type being a handover optimization or a random access channel optimization.

3. The self-optimization method according to claim 1 or 2, wherein the self-optimization trigger rule comprises at least one of:
a self-optimization type and a self-optimization objective, the self-optimization type being a handover optimization or a random access channel optimization.

4. The self-optimization method according to claim 3, wherein the self-optimization trigger rule further comprises:
relationship of multiple self-optimization objectives when the self-optimization trigger rule comprises multiple self-optimization objectives.

5. A device, when programmed for carrying out the method of claim 1 for self-optimization, **characterized by** comprising:
means for acquiring a self-optimization trigger rule, the self-optimization trigger rule being c created (22) by a managing unit in accordance with self-optimization capability of the device;
means for executing (23) a self-optimization when satisfying condition of the self-optimization trigger rule;
wherein the self-optimization capability of the device comprises at least one of:
capability of handover optimization, and capability of random access channel optimization.

6. The device according to claim 5, wherein the self-optimization trigger rule comprises at least one of:
a self-optimization type and a self-optimization objective, the self-optimization type is a handover optimization or a random access channel optimization.

7. A self-optimization method, **characterized by** comprising:
acquiring, by a managing unit (41), a self-optimization capability of a managed unit;
creating (22), by the managing unit (41), a self-optimization trigger rule in accordance to the self-optimization capability of the managed unit (42); and
sending, by the managing unit (41), the self-optimization trigger rule to the managed unit (42), the self-optimization trigger rule being for the managed unit (42) to execute a self-optimization when satisfying condition of the self-optimization trigger rule;
wherein the self-optimization capability comprises at least one of : capability of handover optimization, and capability of random access channel optimization.

8. The self-optimization method according to claim 7, wherein the self-optimization trigger rule comprises at least one of:
a self-optimization type and a self-optimization objective, the self-optimization type is a handover optimization or a random access channel optimization.

9. A device, when programmed for carrying out the method of claim 7 for self-optimization, **characterized by** comprising:
means for acquiring a self-optimization capability of a managed unit;
means for creating (22) a self-optimization trigger rule in accordance to the self-optimization capability of the managed unit;
means for sending the self-optimization trigger rule to the managed unit, the self-optimization trigger rule being for the managed unit to execute (23) a self-optimization when satisfying condition of the self-optimization trigger rule;
wherein the self-optimization capability comprises at least one of : capability of handover optimization, and capability of random access channel optimization.

10. The device according to claim 9, wherein the self-optimization trigger rule comprises at least one of:
a self-optimization type and a self-optimization objective, the self-optimization type is a handover optimization or a random access channel optimization.

## Patentansprüche

1. Selbstoptimierungsverfahren, **dadurch gekennzeichnet, dass** es Folgendes umfasst:
Erhalten einer Selbstoptimierungsauslöseregel durch eine verwaltete Einheit (42),
wobei die Selbstoptimierungsauslöseregel durch eine Verwaltungseinheit (41) gemäß einer Selbstoptimierungsfähigkeit der verwalteten Einheit erzeugt (22) wird,
Ausführen (23) einer Selbstoptimierung durch die verwaltete Einheit (42) bei Erfüllung einer Bedingung der Selbstoptimierungsauslöseregel,
wobei die Selbstoptimierungsfähigkeit der verwalteten Einheit (42) mindestens eines der Folgenden umfasst:
Fähigkeit zur Handover-Optimierung und Fähigkeit zur Optimierung von Kanälen mit wahlfreiem Zugriff.

2. Selbstoptimierungsverfahren nach Anspruch 1, wobei die Selbstoptimierungsauslöseregel gemäß der Selbstoptimierungsfähigkeit einer verwalteten Einheit unter Verwendung zumindest eines der Folgenden erzeugt wird:
eines Selbstoptimierungstyps und eines Selbstoptimierungsziels, wobei es sich bei dem Selbstoptimierungstyp um eine Handover-Optimierung oder eine Optimierung von Kanälen mit wahlfreiem Zugriff handelt.

3. Selbstoptimierungsverfahren nach Anspruch 1 oder 2, wobei die Selbstoptimierungsauslöseregel mindestens eines der Folgenden umfasst:
einen Selbstoptimierungstyp und ein Selbstoptimierungsziel, wobei es sich bei dem Selbstoptimierungstyp um eine Handover-Optimierung oder eine Optimierung von Kanälen mit wahlfreiem Zugriff handelt.

4. Selbstoptimierungsverfahren nach Anspruch 3, wobei die Selbstoptimierungsauslöseregel ferner Folgendes umfasst:
Beziehung mehrerer Selbstoptimierungsziele, wenn die Selbstoptimierungsauslöseregel mehrere Selbstoptimierungsziele umfasst.

5. Einrichtung, die, wenn sie zum Durchführen des Verfahrens nach Anspruch 1 zur Selbstoptimierung programmiert ist, **dadurch gekennzeichnet ist, dass** sie Folgendes umfasst:
Mittel zum Erhalten einer Selbstoptimierungsauslöseregel, wobei die Selbstoptimierungsauslöseregel durch eine Verwaltungseinheit gemäß einer Selbstoptimierungsfähigkeit der Einrichtung erzeugt (22) wird,
Mittel zum Ausführen (23) einer Selbstoptimierung bei Erfüllung einer Bedingung der Selbstoptimierungsauslöseregel,
wobei die Selbstoptimierungsfähigkeit der Einrichtung mindestens eines der Folgenden umfasst:
Fähigkeit zur Handover-Optimierung und Fähigkeit zur Optimierung von Kanälen mit wahlfreiem Zugriff.

6. Einrichtung nach Anspruch 5, wobei die Selbstoptimierungsauslöseregel mindestens eines der Folgenden umfasst:
einen Selbstoptimierungstyp und ein Selbstoptimierungsziel, wobei es sich bei dem Selbstoptimierungstyp um eine Handover-Optimierung oder eine Optimierung von Kanälen mit wahlfreiem Zugriff handelt.

7. Selbstoptimierungsverfahren, **dadurch gekennzeichnet, dass** es Folgendes umfasst:
Erhalten einer Selbstoptimierungsfähigkeit einer verwalteten Einheit durch eine Verwaltungseinheit (41),
Erzeugen (22) einer Selbstoptimierungsauslöseregel gemäß der Selbstoptimierungsfähigkeit der verwalteten Einheit (42) durch die Verwaltungseinheit (41) und
Senden der Selbstoptimierungsauslöseregel an die verwaltete Einheit (42) durch die Verwaltungseinheit (41), wobei die Selbstoptimierungsauslöseregel für die verwaltete Einheit (42) darin besteht, dass sie bei Erfüllung einer Bedingung der Selbstoptimierungsauslöseregel eine Selbstoptimierung ausführt,
wobei die Selbstoptimierungsfähigkeit mindestens eines der Folgenden umfasst: Fähigkeit zur Handover-Optimierung und Fähigkeit zur Optimierung von Kanälen mit wahlfreiem Zugriff.

8. Selbstoptimierungsverfahren nach Anspruch 7, wobei die Selbstoptimierungsauslöseregel mindestens eines der Folgenden umfasst:
einen Selbstoptimierungstyp und ein Selbstoptimierungsziel, wobei es sich bei dem Selbstoptimierungstyp um eine Handover-Optimierung oder eine Optimierung von Kanälen mit wahlfreiem Zugriff handelt.

9. Einrichtung, die, wenn sie zum Durchführen des Verfahrens nach Anspruch 7 zur Selbstoptimierung programmiert ist, **dadurch gekennzeichnet ist, dass** sie Folgendes umfasst:
Mittel zum Erhalten einer Selbstoptimierungsfähigkeit einer verwalteten Einheit,
Mittel zum Erzeugen (22) einer Selbstoptimierungsauslöseregel gemäß der Selbstoptimierungsfähigkeit der verwalteten Einheit,
Mittel zum Senden der Selbstoptimierungsauslöseregel an die verwaltete Einheit,
wobei die Selbstoptimierungsauslöseregel für die verwaltete Einheit darin besteht, dass sie bei Erfüllung einer Bedingung der Selbstoptimierungsauslöseregel eine Selbstoptimierung ausführt (23),
wobei die Selbstoptimierungsfähigkeit mindestens eines der Folgenden umfasst: Fähigkeit zur Handover-Optimierung und Fähigkeit zur Optimierung von Kanälen mit wahlfreiem Zugriff.

10. Einrichtung nach Anspruch 9, wobei die Selbstoptimierungsauslöseregel mindestens eines der Folgenden umfasst:
einen Selbstoptimierungstyp und ein Selbstoptimierungsziel, wobei es sich bei dem Selbstoptimierungstyp um eine Handover-Optimierung oder eine Optimierung von Kanälen mit wahlfreiem Zugriff handelt.

## Revendications

1. Procédé d'auto-optimisation, **caractérisé en ce qu'**il comprend les étapes consistant à :
acquérir, par une unité gérée (42), une règle de déclenchement d'auto-optimisation, la règle de déclenchement d'auto-optimisation étant créée (22) par une unité gérante (41) en fonction d'une capacité d'auto-optimisation de l'unité gérée ;
exécuter (23), par l'unité gérée (42), une auto-optimisation lorsque la condition de la règle de déclenchement d'auto-optimisation est satisfaite ;
la capacité d'auto-optimisation de l'unité gérée (42) comprenant au moins l'un des éléments suivants :
capacité d'optimisation de transfert, capacité d'optimisation de canal d'accès aléatoire.

2. Procédé d'auto-optimisation selon la revendication 1, dans lequel la règle de déclenchement d'auto-optimisation est crée en fonction de la capacité d'auto-optimisation d'une unité gérée au moyen d'au moins un des éléments suivants :
un type d'auto-optimisation et un objectif d'auto-optimisation, le type d'auto-optimisation étant une optimisation de transfert ou une optimisation de canal d'accès aléatoire.

3. Procédé d'auto-optimisation selon la revendication 1 ou 2, dans lequel la règle de déclenchement d'auto-optimisation comprend au moins l'un des éléments suivants :
un type d'auto-optimisation et un objectif d'auto-optimisation, le type d'auto-optimisation étant une optimisation de transfert ou une optimisation de canal d'accès aléatoire.

4. Procédé d'auto-optimisation selon la revendication 3, dans lequel la règle de déclenchement d'auto-optimisation comprend également :
une relation de plusieurs objectifs d'auto-optimisation lorsque la règle de déclenchement d'auto-optimisation comprend plusieurs objectifs d'auto-optimisation.

5. Dispositif qui, lorsqu'il est programmé pour exécuter le procédé d'auto-optimisation selon la revendication 1, est **caractérisé en ce qu'**il comprend :
un moyen pour acquérir une règle de déclenchement d'auto-optimisation, la règle de déclenchement d'auto-optimisation étant créée (22) par une unité gérante en fonction d'une capacité d'auto-optimisation du dispositif;
un moyen pour exécuter (23) une auto-optimisation lorsque la condition de la règle de déclenchement d'auto-optimisation est satisfaite ;
la capacité d'auto-optimisation du dispositif comprenant au moins l'un des éléments suivants :
capacité d'optimisation de transfert, capacité d'optimisation de canal d'accès aléatoire.

6. Dispositif selon la revendication 5, dans lequel la règle de déclenchement d'auto-optimisation comprend au moins l'un des éléments suivants :
un type d'auto-optimisation et un objectif d'auto-optimisation, le type d'auto-optimisation étant une optimisation de transfert ou une optimisation de canal d'accès aléatoire.

7. Procédé d'auto-optimisation, **caractérisé en ce qu'**il comprend les étapes consistant à :
acquérir, par une unité gérante (41), une capacité d'auto-optimisation d'une unité gérée ;
créer (22), par l'unité gérante (41), une règle de déclenchement d'auto-optimisation en fonction de la capacité d'auto-optimisation de l'unité gérée (42); et
envoyer, par l'unité gérante (41), la règle de déclenchement d'auto-optimisation à l'unité gérée (42), la règle de déclenchement d'auto-optimisation servant à faire en sorte que l'unité gérée (42) exécute une auto-optimisation lorsque la condition de la règle de déclenchement d'auto-optimisation est satisfaite ;
la capacité d'auto-optimisation comprenant au moins l'un des éléments suivants :
capacité d'optimisation de transfert, capacité d'optimisation de canal d'accès aléatoire.

8. Procédé d'auto-optimisation selon la revendication 7, dans lequel la règle de déclenchement d'auto-optimisation comprend au moins l'un des éléments suivants :
un type d'auto-optimisation et un objectif d'auto-optimisation, le type d'auto-optimisation étant une optimisation de transfert ou une optimisation de canal d'accès aléatoire.

9. Dispositif qui, lorsqu'il est programmé pour exécuter le procédé d'auto-optimisation selon la revendication 7, est **caractérisé en ce qu'**il comprend :
un moyen pour acquérir une capacité d'auto-optimisation d'une unité gérée ;
un moyen pour créer (22) une règle de déclenchement d'auto-optimisation en fonction de la capacité d'auto-optimisation de l'unité gérée ;
un moyen pour envoyer la règle de déclenchement d'auto-optimisation à l'unité gérée, la règle de déclenchement d'auto-optimisation servant à faire en sorte que l'unité gérée exécute (23) une auto-optimisation lorsque la condition de la règle de déclenchement d'auto-optimisation est satisfaite ;
la capacité d'auto-optimisation comprenant au moins l'un des éléments suivants : capacité d'optimisation de transfert, capacité d'optimisation de canal d'accès aléatoire.

10. Dispositif selon la revendication 9, dans lequel la règle de déclenchement d'auto-optimisation comprend au moins l'un des éléments suivants :
un type d'auto-optimisation et un objectif d'auto-optimisation, le type d'auto-optimisation étant une optimisation de transfert ou une optimisation de canal d'accès aléatoire.
